# EUROPEAN PATENT SPECIFICATION

(11) **EP 3 430 629 B1**
(45) Date of publication and mention of the grant of the patent: **18.03.2020**
(21) Application number: 17705581.1
(22) Date of filing: 13.02.2017
(51) Int. Cl.: C08L 63/00, H02K 15/12, H01B 3/04, H02K 3/30, H01B 3/40

(54) **ELECTRICAL INSULATION SYSTEM BASED ON EPOXY RESINS FOR GENERATORS AND MOTORS**
ELEKTRISCHE ISOLIERUNGSANORDNUNG AUF BASIS VON EPOXIDHARZEN FÜR GENERATOREN UND MOTOREN
SYSTÈME D'ISOLATION ÉLECTRIQUE À BASE DE RÉSINES ÉPOXY POUR GÉNÉRATEURS ET MOTEURS

(30) Priority: 15.03.2016 EP 16160275
(43) Date of publication of application: 23.01.2019
(73) Proprietor: Huntsman Advanced Materials Licensing (Switzerland) GmbH, 4057 Basel (CH); Isovolta AG, 2355 Wiener Neudorf (AT)
(72) Inventor: BEISELE, Christian, 79379 Müllheim (DE); BAER, Daniel, 4125 Riehen (CH); STECHER, Harald, 9520 Skoerping (DK)
(74) Representative: Weidner Stern Jeschke
(86) International application number: PCT/EP2017/053102
(87) International publication number: WO 2017/157594

(56) References cited:
- EP-A2- 0 066 543
- EP-A2- 1 850 460
- WO-A2-00/04075
- US-A- 4 336 302
- US-B1- 6 579 566

## Description

The present invention relates to a novel electrical insulation system for vacuum pressure impregnation of electrical machines, in particular large electrical machines, which insulation system is based on a thermally curable epoxy resin. The invention further relates to a specific mica paper or mica tape for use with said insulation system and to the use of said insulation system in the manufacture of rotors or stators of electrical generators or motors.

Electrical engines, such as generators used for power plants or large electrical motors, contain current-carrying parts, e.g. wires and/or coils, that need to be electrically insulated against each other and/or against other electroconductive parts of the engine with which they would otherwise have direct contact. In medium or high voltage engines this insulation is typically provided by mica paper or mica tapes. After wrapping its current-carrying parts with the mica paper or mica tape, either the whole equipment or only a part thereof is impregnated with a curable, frequently epoxy-based, liquid resin formulation which also penetrates the mica paper or mica tape. This impregnation can advantageously be carried out using the so-called vacuum pressure impregnation (VPI) process. To this purpose the construction components of the engine, which shall be impregnated, are inserted into a container, which is then evacuated, so that humidity and air are removed from all gaps and voids of the components in the container including the gaps and voids in the mica paper or mica tape. Then an impregnation formulation is fed into the evacuated container followed by a period of applying an overpressure e.g. of dry air or nitrogen to the container containing the components, optionally under cautious heating in order to reduce the viscosity of the impregnation formulation sufficiently to allow an appropriate impregnation within a reasonable time, and said formulation penetrates the mica paper or tapes and the gaps and voids existing in the components forced by the pressure difference between the vacuum and the high pressure applied to the components. The residual impregnation formulation is thereafter removed from the container to a storage tank, optionally replenished with new formulation and stored, frequently under cooling, for its next use. The impregnated components are also removed from the container and thermally cured in order to mechanically fix the mica-wrapped current-carrying parts of the component to each other and/or to embed these parts or the entire component into an electrically insulating polymer mass. This cycle of impregnation of components and interim storage of the impregnation formulation until further use is normally repeated until the viscosity of the impregnation formulation increases to an extent that it can no longer penetrate the voids of the components sufficiently within a reasonable time for ensuring an appropriate electrical insulation after cure of the formulation.

There are several important aspects regarding the suitability of a material for a successful industrial vacuum pressure impregnation, particularly of large electrical engines or components thereof.

The viscosity of the impregnation formulation determines to a major extent the impregnation effectiveness and capability of the formulations. The lower the viscosity of the formulation the better and faster it can fill up gaps and voids in the impregnated component and in the mica paper or mica tape.

Furthermore, the afore-mentioned initial viscosity of the formulation, i.e. the viscosity of the formulation, when it is used for the first time, should increase only very slowly over time at the temperatures applied for the impregnation with the formulation and the storage of the formulation between subsequent uses, so that the formulation maintains a reasonable impregnation effectiveness and capability and must not be replaced with new formulation for a reasonably long time period, and this preferably without need to cool the formulation when it is not in use.

Contrary to this, the reactivity of the impregnation formulation should preferably be high at higher temperatures in order to ensure a fast curing of the formulation after impregnation.

The working hygiene, meaning the release of potentially harmful compounds to the working environment, is a further important aspect concerning the handling of an impregnation formulation.

The long-term thermal stability of the cured impregnation formulation, its electrical properties and its mechanical properties must furthermore be good to ensure a long endurance and lifetime of the impregnated components of the engines.

A particularly important descriptor of electrical insulation systems based on polymers is the "thermal class" of the system or its cured polymer formulation, which classifies the system or its cured polymer formulation according to the maximum continuous working temperature applicable to the insulation system established for 20 years of working life.Two particularly important thermal classes for medium sized and large electrical engines like motors or generators are "Class F" and "Class H" and permit a maximum attainable continuous use temperature of the cured insulation material of 155°C and 180°C, respectively.

Another particularly important parameter of a cured electric insulation material is its dielectric dissipation factor tan δ, which is a parameter quantifying the electric energy inherently lost to the insulation material, usually in form of heat, in an alternating electrical field. It corresponds to the ratio of the electric power lost in the insulating material to the electric power applied and is therefore frequently expressed as a percentage, for example a tan δ of 0.1 corresponds to 10 % according to this notation. Low dissipation factors are generally desirable in order to reduce the heating-up of the insulator material during operation and thus reduce its thermal decomposition and destruction. The dissipation factor is not only dependent on the chemical composition of the insulating material but also depends on several processing parameters, such as the degree of cure of the insulating material, its content of voids, moisture and impurities etc., and is thus a useful indicator of the actual condition of an electrical insulation. The dissipation factor of polymeric material for a given frequency increases with the temperature of the material. For ensuring a suitable insulation and preventing damage of the engines, it should generally be less than about 10%, even at the maximum permissible working temperature according to the insulation class of the material.

Due to their generally good over-all properties and characteristics, epoxy resin formulations are frequently used for the preparation of high quality insulation systems for electrical engineering.

The currently most widely used epoxy resin formulation for vacuum pressure impregnation insulation of electrical components is based on diglycidyl ethers of bisphenol A and/or bisphenol F and/or cycloaliphatic epoxy resins, methylhexahydrophthalic acid anhydride (MHHPA) or hexahydrophthalic acid anhydride (HHPA) as curing agent (hardener) and an appropriate curing catalyst (curing accelerator) such as e.g. zinc naphthenate. Insulations based on these formulations are normally rated to be Class H-insulations. In addition, these formulations possess quite a low initial viscosity and thus provide a very good impregnation effectiveness. Furthermore, at least when the curing catalyst is incorporated into the mica paper or mica tape (in an amount to ensure that sufficient curing catalyst is released during the impregnation step to that part of the formulation taken up by the component to be impregnated for allowing its efficient thermal cure after removal of the component from the residual formulation bath), the increase in viscosity of such an impregnation bath over time can be kept within reasonable limits, because no or only marginal residual amounts of curing catalyst are present in the bath formulation before it comes into contact with the mica-wrapped construction parts. Therefore, impregnation baths based on these formulations generally have a good shelf life. Nevertheless, it is recommendable to cool these formulations when they are not in use.

Due to the developing regulatory framework for chemicals however, it is expected that the use of anhydride hardeners in epoxy resin formulations will be restricted in the near future, because of their R42 label as a respiratory sensitizer. Therefore, some anhydrides are already on the SVHC candidate list (substances of very high concern) of the REACH regulation. As all known anhydrides are R42-labeled and even yet unknown anhydrides are expected by toxicologists to become also R42-labeled, it is likely that in some years impregnation formulations based on epoxy resins and anhydride hardeners like those mentioned above may no longer be used without special authorisation.

Epoxy resin based formulations for vacuum pressure insulation which are free of anhydride hardeners are already known. For example, one component epoxy resin compositions based on bisphenol A diglycidyl ethers or bisphenol F diglycidyl ethers or mixtures thereof and a latent curing catalyst for homopolymerisation are on the marketplace, such as e.g. ARALDITE® XD 4410. Impregnation formulations like these have the additional advantage that the end user need not possess a mixing equipment on site for mixing the epoxy resin with the anhydride hardener, but on the other hand have the disadvantage that the impregnation bath has a rather high initial viscosity because the anhydride component of anhydride-based insulation formulations, which normally is significantly lower in viscosity and thus reduces the overall viscosity of anhydride-containing formulations, is absent in these systems. Formulations of this kind therefore normally must be warmed-up to temperatures around 60°C in order to achieve a sufficient impregnation effectiveness. Consequently, the increase of viscosity of these fomulations during non-use is also comparably high. Furthermore, the thermal Class F of these systems is no longer considered to be adequate for many engines.

Accordingly there is still a need for improved anhydride-free epoxy resin insulation systems suitable in particular for vacuum pressure impregnation. It is therefore the objective of the present invention to provide such an insulation system having processing characteristics comparable to those of the above described current "gold standard"-systems for vacuum pressure impregnation based on liquid epoxy resins and anhydride hardeners, or even better properties, in particular in respect of impregnation effectiveness, storage stability, curing speed, achievable thermal class and the long-term thermal, mechanical and electrical properties including in particular a sufficiently low dielectric dissipation factor at all working temperatures permissible for Class F and Class H insulation systems.

It has now been found that the afore-mentioned objective is solved by an anhydride-free insulation system for current-carrying construction parts of an electric engine, for example in form of a corresponding kit of parts, which comprises:
(A) a mica paper or mica tape for wrapping parts of said electric engine that are potentially current-carrying during operation of the engine, which mica paper or mica tape is impregnable via vacuum pressure impregnation with a thermally curable epoxy resin formulation and comprises a thermally activatable curing initiator for the epoxy resin formulation containing one or more quarternary ammonium salts of an aromatic-heterocyclic compound, which contains 1 or 2 nitrogen atoms, and a complex anion selected from the group consisting of BF₄⁻, PF₆⁻, SbF₆⁻, SbF₅(OH)⁻, AsF₆⁻ and Al[OC(CF₃)₃]₄⁻ in an amount sufficient to cure the epoxy resin taken up by the mica paper or mica tape and the construction part of the engine during the vacuum pressure impregnation step after said step;
(B) a thermally curable bath formulation for the vacuum pressure impregnation comprising one or more epoxy resins, which formulation is substantially or, preferably, entirely free of a thermally activatable curing initiator for the epoxy resin formulation, in particular of quarternary ammonium salts of aromatic-heterocyclic compounds containing 1 or 2 nitrogen atoms, and of a complex anion selected from the group consisting of BF₄⁻, PF₆⁻, SbF₆⁻, SbF₅(OH)⁻, AsF₆⁻ and Al[OC(CF₃)₃]₄⁻, and
(C) one or more co-initiator for the thermally activatable curing initiator selected from a diarylethane derivative of formula: 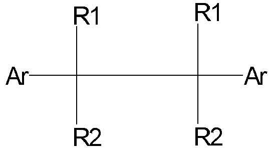 wherein Ar is phenyl, naphthyl, or C₁-C₄alkyl- or chloro-substituted phenyl, R1 is hydroxy, C₁-C₄alkoxy, -O-CO-R3 or -OSiR4R5R6, wherein R3 is C₁-C₈alkyl or phenyl, and R4, R5 and R6 are each independently of one another C₁-C₄alkyl or phenyl, and R2 is C₁-C₄alkyl or cyclohexyl or has the same meaning as Ar, wherein the one or more of said co-initiator (C) is contained in the mica paper or mica tape (A) of the system, and/or the one or more of said co-initiator (C) is contained in the a thermally curable epoxy resin bath formulation (B) of the system and is present in said mica paper or mica tape (A) and /or the said thermally curable epoxy resin bath formulation (B) in an overall amount sufficient to cure the epoxy resin taken up by the mica paper or mica tape and the construction part of the engine during the vacuum pressure impregnation step after said step.

Epoxy resin formulations comprising an epoxy resin and a heat-activatible initiator for the polymerisation of the epoxy resin, consisting of a mixture comprising at least one quarternary ammonium salt of an aromatic-heterocyclic compound which contains 1 or 2 nitrogen atoms, and of a complex anion selected from the group consisting of BF₄⁻, PF₆⁻, SbF₆⁻, SbF₅(OH)⁻, AsF₆⁻ and Al[OC(CF₃)₃]₄⁻, and
at least one thermal radical former selected from a diarylethane derivative of formula: 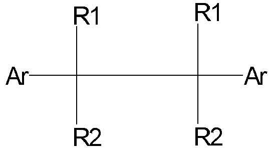 wherein Ar is phenyl, naphthyl, or C₁-C₄alkyl- or chloro-substituted phenyl, R1 is hydroxy, C₁-C₄alkoxy, -O-CO-R3 or -OSiR4R5R6, wherein R3 is C₁-C₈alkyl or phenyl, and R4, R5 and R6 are each independently of one another C₁-C₄alkyl or phenyl, and R2 is C₁-C₄alkyl or cyclohexyl or has the same meaning as Ar *per se* are already known and have been described for example in US-Patents 4,393,185 and 6,579,566 as well as in WO 00/04075, the entire disclosure of which is incorporated by reference into the present description. These prior art references also disclose these formulations to be among other things generally useful as electrical insulating compositions.

US 6,579,566 furthermore discloses the afore-mentioned epoxy formulations as useful for fixing the windings of electric coils, e.g. of a rotor of an electric engine, via trickle impregnation or hot-dip rolling. Trickle impregnation and hot dip rolling however are procedures for impregnation of the windings with an insulating formulation, wherein the construction component comprising the winding to be impregnated is heated before contacting it with the impregnation formulation to temperatures of 110 to 200°C, i.e. temperatures where already fast curing of the impregnation formulation occurs. It is therefore obvious that the impregnation conditions in the area of the construction parts where the impregnation actually has to occur (i.e. inside of the windings) are quite different in a trickle impregnation or hot-dip rolling process as referred to in US 6,579,566 (for example, as far as the viscosity of the formulation is concerned) from conditions required during the impregnation of a construction part via vacuum pressure impregnation, wherein the temperature of the impregnating formulation is either not or, in case of a need for reduction of the viscosity of the impregnation formulation, only moderately elevated, e.g. up to about 60°C, and the entire curing of the insulation formulation only occurs after termination of the impregnation of the construction part. Therefore the known suitability of these epoxy resin formulations for trickle impregnation or hot-dip rolling impregnation did not allow a person of ordinary skill to predict that the set of compounds referred to in US 6,579,566 can also be used for designing an insulation system for vacuum pressure impregnation based on compounds used in the epoxy formulations according to US 6,579,566.

The amount of curing initator in the epoxy resin formulation taken up by the mica paper or mica tape and the construction part of the engine during the vacuum pressure impregnation step depends on the nature of the epoxy resin bath formulation to be cured and the desired polymerisation conditions. Suitable amounts can be determined by a skilled person with a few pilot tests. Preferably said amount is between about 0.05 to about 15 weight percent, more preferably between about 0.1 to about 10 weight percent, most preferably between about 0.1 and about 5 weight percent, based on the epoxy resin.

The amount of co-initators in the epoxy resin formulation taken up by the mica paper or mica tape and the construction part of the engine during the vacuum pressure impregnation step depends also on the nature of the epoxy resin bath formulation to be cured and the desired polymerisation conditions. Suitable amounts can be determined by a skilled person with a few pilot tests. Preferably said amount is between about 0.05 to about 15 weight percent, more preferably between about 0.1 to about 10 weight percent, most preferably between about 0.1 and about 5 weight percent, based on the weight of the epoxy resin.

The weight ratio between the curing initiator and the co-initiators in the epoxy resin formulation taken up by the mica paper or mica tape and the construction part of the engine during the vacuum pressure impregnation step can vary to a large extent. Preferably, said ratio is between about 0.05 : about 1 and about 1 : about 0.05, more preferably between about 0.5 : about 2 and about 2 : about 0.5. Suitable amounts of the weight ratio for a specific pair of curing initiator and co-initiator can in case of need be easily determined by a skilled person with a few pilot tests.

Mica paper and mica tapes are well known in the art.

For the purposes of this invention the term mica paper is used in its usual sense to refer to a sheet-like aggregate of mica particles, in particular lepidolite or, more preferably, muscovite or phlogophite particles, which are optionally heated to a temperature of about 550 to about 850°C for a certain time period (e.g. about 5 minutes to 1 hour) to partially dehydrate them and are ground into fine particles in an aqueous solution and then formed into a mica paper by conventional paper-making techniques.

The term mica tape as used in this application refers to a sheet-like composite material consisting of one or more layers of mica paper as described above which is (are) glued to a sheet-like carrier material, usually a non-metallic inorganic fabric such as glass or alumina fabric or polymer film such as polyethylene terephthalate or polyimide, using a small amount (about 1 to about 10g/m² of mica paper) of a resin, preferably an epoxy or acrylic resin or a mixture thereof. The agglutination of the mica paper and the fabric is advantagously performed in a press or a calender at a temperature above the melting point of the adhesive resin.

The mica paper or the mica tape is then impregnated with the thermally activatable curing initiator containing one or more quarternary ammonium salts of an aromatic-heterocyclic compound, which contains 1 or 2 nitrogen atoms, and a complex anion selected from the group consisting of BF₄⁻, PF₆⁻, SbF₆⁻, SbF₅(OH)⁻, AsF₆⁻ and Al[OC(CF₃)₃]₄⁻ and, optionally, one or more co-initiators for said thermally activatable curing initiator selected from a diarylethane derivative of formula: 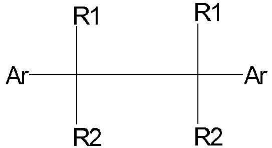 wherein Ar is phenyl, naphthyl, or C₁-C₄alkyl- or chloro-substituted phenyl, R1 is hydroxy, C₁-C₄alkoxy, -O-CO-R3 or -OSiR4R5R6, wherein R3 is C₁-C₈alkyl or phenyl, and R4, R5 and R6 are each independently of one another C₁-C₄alkyl or phenyl, and R2 is C₁-C₄alkyl or cyclohexyl or has the same meaning as Ar.

Mica papers and mica tapes impregnated with the compounds described above are still novel and are therefore a further subject of the present invention. As background art, US 4,336,302 is cited. US 4,336,302 discloses insulating tape for electrical conductors such as mica tape to be impregnated with an epoxy resin. A quaternary onium salt is used as a thermally activable curing initiator.

For the preparation of mica papers or mica tapes according to the invention the thermally activatable curing initiator and, optionally, one or more of the above-mentioned co-initiators for said thermally activatable curing initiator, are e.g. dissolved in a suitable low-boiling solvent, such as methyl ethyl ketone and the like. The mica paper or mica tape is contacted with said solution, e.g. by immersion therein or by spraying, and the solvent removed to leave the thermally activatable curing initiator and, optionally, one or more of the above-mentioned co-initiator on and/or inside the structure of the mica paper or tape. If the mica paper or mica tape is impregnated with the thermally activatable curing initiator and one or more of the co-initiator, it is normally preferred that this impregnation is performed with a solution comprising the curing initiator and the co-initiators, although it is of course possible to impregnate the mica paper or mica tape simultaneously or consecutively with a solution containing only the curing initiator and another solution containing the co-initiator(s). The concentration of the curing initiator and optional co-initators in the solution is not critical and can vary between e.g. about 0.1 and about 25 percent by weight of curing initator and 0 to about 25 percent of co-initator. The higher the concentration of curing initiator and optional co-initators in the impregnation solution, the higher is the final load of the mica paper or mica tape achieved during the impregnation step.

The mica paper or mica tape according to the invention must contain the thermally activatable curing initator in an amount sufficient to cure the epoxy resin taken up by the mica paper or mica tape and eventually by the construction part of the engine during the vacuum pressure impregnation. For this purpose, the mica paper or mica tape preferably comprises the thermally activatable curing initiator in an amount of about 0.1 to about 15 g/m² of the mica paper or mica tape, more preferably of about 0.2 to about 7.5 g/m² and the co-initators in an amount of 0 to about 15 g/m², preferably 0 to about 7.5 g/m², wherein the amounts of co-initiator incorporated into the mica paper or mica tape should be the larger the less of co-initator(s) is intended to be incorporated into the epoxy bath formulation. If the epoxy bath formulation of the insulation system does not contain any co-initiator, the mica paper or mica tape preferably contains curing initiator and co-initiator in a weight ratio of about 0.05 : about 1 to about 1 : about 0.05, more preferably in a weight ratio of about 0.5 : about 2 to about 2 : about 0.5.

In a preferred embodiment the entire amount of co-initiator (C) is contained in the thermally curable epoxy resin bath formulation (B) of the system.

Quaternary ammonium salts useful as thermally activatable initiators are disclosed, for example, in US-A-4393185, WO-A-0004075, and US-A-6579566 as already indicated above. They are salts of aromatic-heterocyclic nitrogen bases with non-nucleophilic, for example, complex anions, such as BF₄⁻ (tetrafluoroborate), PF₆⁻ (hexafluorophosphate), SbF₆⁻ (hexafluoroantimonate), SbF₅(OH)⁻ (pentafluorohydroxyantimonate), AsF₆⁻ (hexafluoroarsenate) and Al[OC(CF₃)₃]₄⁻ (tetrakis 1,1-bis(trifluoromethyl)-2,2,2-trifluoro-1-ethoxy aluminate).

Individual examples of suitable quaternary ammonium salts include 1-methylquinolinium hexafluorophosphate, 1-methylquinolinium hexafluoroantimonate, 1-benzylquinolinium hexafluoroantimonate, 1-methylquinolinium hexafluoroarsenate, 1-methylquinolinium pentafluorohydroxyantimonate, 1-methylquinolinium tetrafluoroborate, 1,2-dimethylquinolinium hexafluorophosphate, 1-ethylquinolinium hexafluorophosphate, 1-butylquinolinium hexafluorophosphate, 1-benzoylmethylquinolinium hexafluorophosphate, 1-benzoylmethylquinolinium hexafluoroantimonate, 1-benzylquinolinium hexafluoroantimonate, 1-methyl-2,3-diphenylpyridinium hexafluorophosphate, 1,2-dimethyl-3-phenylpyridinium hexafluorophosphate, 1-benzoylmethylpyridinium hexafluorophosphate, 1-ethoxyethylquinolinium hexafluorophosphate, 2-methylisoquinolinium hexafluorophosphate, 10-methylacridinium hexafluorophosphate, 10-benzoylmethylacridinium hexafluorophosphate, 10-butylacridinium hexafluoroarsenate, 5-methylphenanthridinium hexafluorophosphate, 5-benzoylmethylphenanthridinium hexafluorophosphate, 1-methylnaphthyridium hexafluorophosphate, 1-methyl-2,3-diphenylquinoxalinium hexafluorophosphate, 1,2,3-trimethylquinoxalinium hexafluorophosphate, 1,2,4,6-tetramethylpyrimidinium hexafluorophosphate, 1-methyl-2,4-diphenylpyrimidinium hexafluorophosphate, 1-methyl-3-phenylpyridazinium hexafluorophosphate, 1-methyl-2,5-diphenylpyridazinium hexafluorophosphate, 1-methylphenanthrolinium hexafluorophosphate, 5-butylphenazinium hexafluorophosphate, 1-methylquinoxalinium hexafluorophosphate and 1-benzoylmethylquinoxalinium hexafluorophosphate, preferably 1-benzylquinolinium hexafluoroantimonate (N-benzylquinolinium hexafluoroantimonate).

N-benzylquinolinium hexafluoroantimonate is the particularly preferred curing initiator for the purposes of the present application.

The epoxy resins contained in the thermally curable bath formulation for the vacuum pressure impregnation (B) according to the present invention may in principle be any compounds commonly employed in the art of epoxy resins which are liquid at ambient or moderately elevated temperatures such as form about 20 to about 60°C. Illustrative examples of suitable epoxy resins are:
I) Polyglycidyl and poly(β-methylglycidyl) esters which are obtainable by reacting a compound containing at least two carboxyl groups in the molecule with epichlorohydrin or β-methylepichlorohydrin. The reaction is conveniently carried out in the presence of a base.
   Compounds containing at least two carboxyl groups in the molecule may suitably be aliphatic polycarboxylic acids. Examples of such polycarboxylic acids are oxalic acid, succinic acid, glutaric acid, adipic acid, pimelic acid, sebacic acid, suberic acid, azelaic acid or dimerised or trimerised linoleic acid. It is, however, also possible to use cycloaliphatic polycarboxylic acids such as tetrahydrophthalic acid, 4-methyltetrahydrophthalic acid, hexahydrophthalic acid or 4-methylhexahydrophthalic acid. Aromatic polycarboxylic acids can also be used, typically phthalic acid, isophthalic acid and terephthalic acid.
II) Polyglycidyl or poly(β-methylglycidyl) ethers which are obtainable by reacting a compound containing at least two free alcoholic hydroxyl groups and/or phenolic hydroxyl groups and epichlorohydrin or β-methylepichlorohydrin, under alkaline conditions or in the presence of an acid catalyst and subsequent treatment with an alkali.

Ethers of this type may be derived from acyclic alcohols, typically from ethylene glycol, diethylene glycol and higher poly(oxyethylene) glycols, 1,2-propanediol or poly(oxypropylene) glycols, 1,3-propanediol, 1,4-butanediol, poly(oxytetramethylene) glycols, 1,5-pentanediol, 1,6-hexanediol, 2,4,6-hexanetriol, glycerol, 1,1,1-trimethylolpropane, pentaerythritol, sorbitol, as well as from polyepichlorohydrins. They may also be derived from cycloaliphatic alcohols such as 1,3- or 1,4-dihydroxycyclohexane, 1,4-cyclohexanedimethanol, bis(4-hydroxycyclohexyl)methane, 2,2-bis(4-hydroxycyclohexyl)propane or 1,1-bis(hydroxymethyl)cyclohex-3-ene, or they contain aromatic nuclei such as N,N-bis(2-hydroxyethyl)aniline or p,p'-bis(2-hydroxy-ethylamino)diphenylmethane.

The epoxy compounds may also be derived from mononuclear phenols, typically from resorcinol or hydroquinone, or they are derived from polynuclear phenols such as bis(4-hydroxyphenyl)methane, 4,4'-dihydroxybiphenyl, bis(4-hydroxyphenyl)sulfone, 1,1,2,2-tetrakis(4-hydroxyphenyl)ethane, 2,2-bis(4-hydroxyphenyl)propane, 2,2-bis(3,5-dibromo-4-hydroxyphenyl)propane, as well as from novolaks obtainable by condensation of aldehydes such as formaldehyde, acetaldehyde, chloral or furfuraldehyde, with phenols such as preferably phenol or cresol, or with phenols which are substituted in the nucleus by chlorine atoms or C₁-C₉alkyl groups, for example 4-chlorophenol, 2-methylphenol or 4-tertbutylphenol, or which are obtainable by condensation with bisphenols of the type cited above.

II) Poly-(N-glycidyl) compounds obtainable by dehydrochlorination of the reaction products of epichlorohydrin with amines which contain at least two amino hydrogen atoms. These amines are typically aniline, n-butylamine, bis(4-aminophenyl)methane, m-xylylenediamine or bis(4-methylaminophenyl)methane. The poly(N-glycidyl) compounds also include triglycidyl isocyanurate, N,N'-diglycidyl derivatives of cycloalkylene ureas such as ethylene urea or 1,3-propyleneurea, and diglycidyl derivatives of hydantoins, typically of 5,5-dimethylhydantoin.

IV) Poly(S-glycidyl) compounds, preferably bis(S-glycidyl) derivatives which are derived from dithiols such as 1,2-ethanediol or bis(4-mercaptomethylphenyl) ether.

V) Cycloaliphatic epoxy resins, i.e. epoxy resins comprising at least one epoxy group fused to a cycloaliphatic ring in the molecule of the epoxy resin like e.g diepoxides of vinylcyclohexene or dicyclohexadiene or dicyclopentadiene, bis(2,3-epoxycyclopentyl) ether, 2,3-epoxycyclopentyl glycidyl ether, 1,2-bis(2,3-epoxycyclopentyloxy)ethane, 3,4-epoxycyclohexyl-3',4'-epoxycyclohexanecarboxylate or 3,4-epoxycyclohexylmethyl-3',4'-epoxycyclohexanecarboxylate.

It is also possible to use epoxy resins in which the 1,2-epoxy groups are attached to different hetero atoms or functional groups. These compounds typically comprise the N,N,O-triglycidyl derivative of 4-aminophenol, the glycidyl ether-glycidyl ester of salicylic acid, N-glycidyl-N'-(2-glycidyloxypropyl)-5,5-dimethylhydantoin or 2-glycidyl-oxy-1,3-bis(5,5-dimethyl-1-glycidylhydantoin-3-yl)propane.

Furthermore used for the present invention can be epoxy resins based on diglycidyl ethers of a bisphenol, preferably diglycidyl ethers of bisphenol A or bisphenol F.

Also suitable for use as component A are epoxy resins based on polyglycidyl esters of polycarboxylic acids, preferably diglycidyl phthalate, diglycidyl hexahydrophthalate, or triglycidyl trimellitate.

Other suitable epoxy resins are based on trimethylolpropane triglycidyl ether or cycloaliphatic epoxy resins.

The epoxy resin bath formulation should have a low viscosity, preferably not more that about 5000 mPa.s at 25°C, more preferably not more that about 1000 mPa.s at 25°C.

Particularly preferred for the purposes of the present invention are epoxy resins derived from cycloaliphatic polycarboxylic acids such as the diglycidyl esters of hexahydrophthalic acid or 4-methylhexahydrophthalic acid, and cycloaliphatic epoxy resins such as those described above comprising at least one epoxy group preferably two epoxy groups fused to a cycloaliphatic ring in the molecule of the epoxy resin like e.g diepoxides of vinylcyclohexene or dicyclohexadiene or dicyclopentadiene, bis(2,3-epoxycyclopentyl) ether, 2,3-epoxycyclopentyl glycidyl ether, 1,2-bis(2,3-epoxycyclopentyloxy)ethane, 3,4-epoxycyclohexyl-3',4'-epoxycyclohexanecarboxylate or 3,4-epoxycyclohexylmethyl-3',4'-epoxycyclohexanecarboxylate.

These epoxy resins have, on one hand, a very low viscosity at room temperature or moderately elevated temperatures of about 20°C to about 60°C and result, on the other hand, when thermally cured with a curing initiator/co-initiator system according to the present invention, in a cured insulation material of insulation class F or H, i.e. permit a maximum continuous use temperature of 155°C and 180°C, respectively, which insulation material furthermore exhibits excellent dielectric dissipation factors (tan δ) being significantly below 10% at 155°C.

The most preferred epoxy resin for the purposes of the present invention is 3,4-epoxycyclohexylmethyl-3',4'-epoxycyclohexane-carboxylate.

Although not preferred and usually unnecessary, it is within the frame of the present invention to add additional auxiliary agents to the thermally curable bath formulation (B) of the systems according to the present invention as long as these agents do not have a negative impact on the properties of the formulation before cure, like e.g. on its viscosity or shelf life, and/or on the properties of finally obtained the cured insulation material, in particular on its dielectric dissipation factor and its thermal classification (insulation class). Surch auxiliary agents include for example plasticisers, extenders, pigments, dyes as well as flame retardants, antifoams, adhesion promoters, antioxidants and the like.

1,2-Diarylpinacol derivatives, 1,2-diarylpinacol ether derivatives and 1,2-diaryl pinacol ester or silyl derivatives of formula: 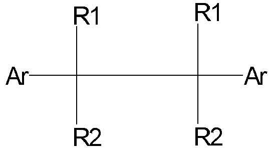 wherein Ar is phenyl, naphthyl, or C₁-C₄alkyl- or chloro-substituted phenyl, R1 is hydroxy, C₁-C₄alkoxy, -O-CO-R3 or -OSiR4R5R6, wherein R3 is C₁-C₈alkyl or phenyl, and R5, R5 and R6 are each independently of one another C₁-C₄alkyl or phenyl, and R2 is C₁-C₄alkyl or cyclohexyl or has the same meaning as Ar form the co-initiator component (C) of the anhydride-free insulation systems for vacuum pressure impregnation according to the present invention. Suitable compounds are also described for example in the already mentioned US-Patents 4,393,185 and 6,579,566 as well as in WO 00/04075.

Illustrative examples of pinacols or pinacol derivatives which may suitably be used as co-initiators are 1,1,2,2-tetraphenyl-1,2-ethanediol (benzopinacol), benzopinacol dimethyl ether, benzopinacol diethyl ether, benzopinacol diisopropyl ether, benzopinacol diacetate, benzopinacol dipropionate, benzopinacol dibutyrate, benzopinacol dicaprylate or benzopinacol dibenzoate, 1,2-bis(trimethylsiloxy)tetraphenylethane, acetophenone pinacol dimethyl ether, acetophenone pinacol dipropyl ether, acetophenone pinacol diacetate, acetophenone pinacol divalerate, acetophenone pinacol dibenzoate, propiophenone pinacol dimethyl ether, propiophenone pinacol dibutyl ether, propiophenone pinacol diacetate, 2,3-diphenyl-2,3-bis(triphenylsiloxy)butane or 3,4-diphenyl-3,4-bis(trimethylsiloxy)hexane, preferably acetophenone pinacols, or 1,1,2,2-tetraphenyl-1,2-ethanediol (benzopinacol) and mixtures thereof.

Most preferred co-initator is 1,1,2,2-tetraphenyl-1,2-ethanediol (benzopinacol), in particular when used together with N-benzylquinolinium hexafluoroantimonate as curing initiator.

The co-initiator(s) (C) may be either contained in the mica paper or mica tape (A) of the insulation systems according to the invention or in the thermally curable epoxy resin bath formulation (B) of the system or in both, the mica paper or mica tape (A) and the thermally curable epoxy resin bath formulation (B).

When the mica paper or mica tape (A) of the insulation system according to the invention does not comprise co-initiator one should preferably add about 0.05 to 15, preferably about 0.1 to about 5 weight percent of co-initator(s) (C) to the bath formulation based on the epoxy resin(s) in the bath. Conversely, when the mica paper or mica tape (A) comprises an amount of the co-initiator(s) (C) that is sufficient to cure the epoxy resin taken up by the mica paper or mica tape and the construction part of the engine during the vacuum pressure impregnation step, in the subsequent thermal curing step the epoxy bath formulation can, of course, be free of co-initiators. Otherwise, the quantitative distribution of the co-initiator(s) between component (A) and (B) of the insulation system according to the invention is in no way critical and can be arbitrarily chosen as long as the co-initiator(s) (C) are present in said component (A) and/or (B) of the system in an overall amount that is sufficient to cure the epoxy resin taken up by the mica paper or mica tape and the construction part of the engine during the vacuum pressure impregnation step after said step. Suitable amounts of co-initiators for incorporation into the mica paper or mica tape (A) and/or the epoxy bath formulation (B) can be easily determined by a skilled person, in case of need also with a few pilot tests.

A particularly preferred insulation system according to the invention is a system, wherein the mica paper or the mica tape (A) comprises N-benzylquinolinium hexafluoroantimonate as the thermally activatable curing initiator,
the thermally curable bath formulation (B) comprises 3,4-epoxycyclohexylmethyl-3',4'-epoxycyclohexane-carboxylate, preferably as the only epoxy resin, and the co-initiator (C) is 1,1,2,2-tetraphenyl-1,2-ethanediol,
in particular when the thermally curable bath formulation comprises the entire amount of said co-initiator (C).

The insulation systems according to the invention are particularly suitable for use in the manufacture of rotors or stators of electrical generators or motors, in particular of large generators or motors. This use is therefore another subject of the invention.

The electrical insulation systems according to the invention can e.g. be used in the manufacture of rotors or stators of electrical generators or motors according to a process, wherein
(a) the potentially current-carrying parts of the rotor or stator or a construction part thereof are wrapped with a mica paper or mica tape which is impregnable via vacuum pressure impregnation with a thermally curable epoxy resin formulation and comprises a thermally activatable curing initiator for the epoxy resin formulation consisting of one or more quarternary ammonium salts of an aromatic-heterocyclic compound, which contains 1 or 2 nitrogen atoms, and a complex anion selected from the group consisting of BF₄⁻, PF₆⁻, SbF₆⁻, SbF₅(OH)⁻, AsF₆⁻ and and Al[OC(CF₃)₃]₄⁻, and, optionally, at least a partial quantity of one or more co-initiator required for the thermally activatable curing initiator to cure the epoxy resin formulation, selected from a diarylethane derivative of formula: 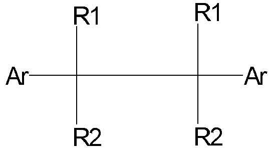 wherein Ar is phenyl, naphthyl, or C₁-C₄alkyl- or chloro-substituted phenyl, R1 is hydroxy, C₁-C₄alkoxy, -O-CO-R3 or -OSiR4R5R6, wherein R3 is C₁-C₈alkyl or phenyl, and R5, R5 and R6 are each independently of one another C₁-C₄alkyl or phenyl, and R2 is C₁-C₄alkyl or cyclohexyl or has the same meaning as Ar, wherein the thermally activatable curing initiator is comprised by said mica paper or mica tape in an amount sufficient to cure the epoxy resin taken up by the mica paper or mica tape and the construction part of the engine during a vacuum pressure impregnation step,
(b) the rotor or stator or the construction part thereof is inserted into a container,
(c) the container is evacuated,
(d) a thermally curable bath formulation comprising one or more epoxy resins, which formulation is substantially or, preferably, entirely free of a thermally activatable curing initiator for the epoxy resin formulation, in particular of quarternary ammonium salts of aromatic-heterocyclic compounds containing 1 or 2 nitrogen atoms, and of a complex anion selected from the group consisting of BF₄⁻, PF₆⁻, SbF₆⁻, SbF₅(OH)⁻, AsF₆⁻ and Al[OC(CF₃)₃]₄⁻ and which comprises the remainder of the amount of the one or more co-initiator(s) required for the thermally activatable curing initiator to cure the epoxy resin formulation, is fed into the evacuated container followed by a period of applying an overpressure e.g. of dry air or nitrogen to the container containing the rotor or stator or the construction part thereof, optionally under cautious heating in order to reduce the viscosity of the thermally curable bath formulation in the container sufficiently to allow that said formulation penetrates said mica paper or mica tape and the gaps and voids existing in the structure of the rotor or stator or the construction part thereof within a desired time period forced by the pressure difference between the vacuum and the high pressure applied to the components,
(e) the residual thermally curable bath formulation is removed from the container, and
(f) the rotor or stator or the construction part thereof, impregnated with the thermally curable bath formulation, is removed from the container and heated after removal from the container in order to cure the thermally curable bath formulation comprised by said rotor or stator or the construction part thereof.

A corresponding process for using an anhydride-free insulation system according to the invention is a further subject of the invention.

The length of the period of applying the overpressure to the container can be chosen by a skilled person depending e.g. on the viscosity of the thermally curable bath formulation, the structure and impregnability of the mica paper or mica band used, the size of the rotor or stator or the construction part thereof, which shall be impregnated, and the complexity of their construction and ranges generally between about 1 and about 6 hours.

For performing the cure of the thermally curable bath formulation comprised by the rotor or stator or the construction part thereof, they are heated. The curing temperature depends on the epoxy resin formulation applied and the specific curing initiator(s) and co-initiators applied and ranges generally from about 60 to about 200°C, preferably from about 90 to about 160°C.

In an especially preferred embodiment of the above process for using the insulation systems according to the invention in the manufacture of rotors, stators or construction parts thereof the thermally curable bath formulation is fed into the evacuated container from a storage tank and is returned to said storage tank again after removal from the container and is stored in the tank, optionally under cooling, for further use. Before further use the used bath formulation can be replenished with new formulation.

In a further aspect the present invention relates to mica papers or the mica tapes for use with insulation system described above, which comprise a thermally activatable curing initiator consisting of one or more quarternary ammonium salts of an aromatic-heterocyclic compound, which contains 1 or 2 nitrogen atoms, and a complex anion selected from the group consisting of BF₄⁻, PF₆⁻, SbF₆⁻, SbF₅(OH)⁻, AsF₆⁻ and Al[OC(CF₃)₃]₄⁻.

Preferably, said mica papers or mica tapes comprise the thermally activatable curing initiator in an amount of about 0.1 to about 15 g/m² of the mica paper or mica tape, preferably of about 0.2 to about 7.5 g/m².

A special embodiment of the mica papers or mica tapes according to the invention is mica paper or mica tape additionally comprises one or more co-initiator for said thermally activatable curing initiator selected from a diarylethane derivative of formula: 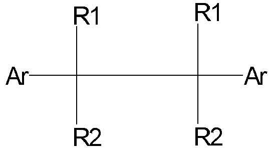 wherein Ar is phenyl, naphthyl, or C₁-C₄alkyl- or chloro-substituted phenyl, R1 is hydroxy, C₁-C₄alkoxy, -O-CO-R3 or -OSiR4R5R6, wherein R3 is C₁-C₈alkyl or phenyl, and R5, R5 and R6 are each independently of one another C₁-C₄alkyl or phenyl, and R2 is C₁-C₄alkyl or cyclohexyl or has the same meaning as Ar, preferably in an amount of 0.1 to about 15 g/m², preferably of about 0.2 to about 7.5 g/m².

Preferred embodiments of the mica papers or mica tapes according to the invention include, mica paper or mica tape, wherein the thermally activatable curing initiator is N-benzylquinolinium hexafluoroantimonate;
mica paper or mica tape, wherein the co-initiator is 1,1,2,2-tetraphenyl-1,2-ethanediol and mica paper or mica tape, which is free of co-initator for the the thermally activatable curing initiator.

### Examples:

The following Examples serve to illustrate the invention. Unless otherwise indicated, the temperatures are given in degrees Celsius, parts are parts by weight and percentages relate to percent by weight (weight percent). Parts by weight relate to parts by volume in a ratio of kilograms to litres.

### (A) Description of ingredients used in the Examples:

- CY 179:: bis-(epoxycyclohexyl)-methylcarboxylate, supplier: Huntsman, Switzerland;
- FK XB 6079 A: N-benzylquinoliniumhexafluoroantimonate, supplier: Huntsman, Switzerland;
- Benzopinacole:: 1,1,2,2 tetraphenyl-1,2-Ethanediol, supplier: Natland, USA;
- MY 790-1 CH:: distilled bisphenol A diglycidyl ether (BADGE), epoxy eq.: 5.7 - 5.9 eq./kg, supplier: Huntsman, Switzerland;
- HY 1102:: methylhexahydrophthalic acid anydride (MHHPA), supplier: Huntsman, Switzerland;
- XD 4410:: one-component epoxy-based VPI-resin based on BADGE, Bisphenol F diglycidyl ether (BFDGE) and 2,3-epoxypropyl-o-tolylether
- DY 9577:: curing accelerator for epoxy anydride hardener systems based on borontrichloride-octyldimethylamine adduct (1:1), supplier: Huntsman, Switzerland;
- DY 073-1:: curing accelerator for epoxy anydride hardener systems based on a tertiary amine

Mica tapes are composed of mica paper, optionally containing one or more additives or resins for consolidation of the mica paper, and a light-weight glass fabric made from E-glass or a polymer film that is adhered to the mica paper with a non-reactive or reactive adhesive for mechanical support. Following tapes were used in the Examples:
New inventive mica tape containing XB 6079 A, supplier: Isovolta, Austria
Poroband ME 4020: mica tape containing zinc naphthenate, supplier: Isovolta, Austria
Poroband 0410: mica tape without accelerator, supplier: Isovolta, Austria

### (B) Comparison of properties of comparative and inventive formulations without tape:

### a) Comparative Example 1 (MY 790-1CH / HY 1102 / DY 9577 / DY 073)

This comparative example is performed in order to compare the properties of the cured neat resins (without mica tape). For curing of the Comparative Example 1, small amounts of the curing accelerators DY 9577 and DY 073-1 are used instead of Zn- naphthenate (contained in typical commercially available-tapes) because Zn-naphthenate is quite difficult to get homogenously dispersed in the epoxy/anhydride mixture.

To test the bath stability at 23 °C, 1 kg of MY 790-1 CH and 1 kg of HY 1102 are mixed together in a steel vessel with an anchor stirrer at ambient temperature for 5 minutes. This mixture is then kept in an inert glass bottle for the storage test regarding bath stability at 23 °C for 80 days.

The viscosity of the mixture is determined before and after the storage at a measurement temperature of 60 °C. While the initial viscosity at 60 °C is 32 mPas, the viscosity increased during the storage time of 80 days by 12 %.

To test all the other properties of the cured material, to 1 kg of the mixture described above as replacement for the Zn- naphthenate that normally would promote the curing of impregnated tape, 0.8 g of DY 9577 and 0.2 g of DY 073-1 are added and mixed for another 10 minutes. This mixture is then cast in to moulds in the corresponding thicknesses to prepare plates for the various tests. After pouring the material to the moulds, these are put into an oven for 16 hours at 90 °C and 10 hours at 140 °C.

### b) Comparative Example 2 (XD 4410)

This example relates to a homopolymerisable aromatic epoxy system containing the catalyst in the composition (one-component system). It does normally go along with mica-tapes free of catalyst.

The commercial product Araldite® XD 4410 is directly used to check the storage stability at 23 °C over 409 days. XD 4410 exhibits a viscosity of 78 mPas (initial at 60 °C) and an increase of less than 6% during 409 days.

The reactivity of this mixture is checked with a gel timer at 80 °C and 140 °C.

To produce plates for the other tests, it is poured into moulds of corresponding thicknesses to prepare plates for the various tests. After pouring the material into the moulds, these are put to an oven for 4 hours at 125 °C and 12 hours at 170 °C.

### c) Inventive Example 1

The example of thermally curable bath formulation (B) for an insulation system according to the invention system is a mixture of 996.2 g resin CY 179 and 2.2 g of Benzopinacole (dissolved at 80°C during 10 min).

The stability of this bath formulation is checked during 180 days storage at 23 °C. The initial viscosity of 46 mPas increases only by 6.5 % during 180 days storage at 23 °C .

To produce test plates without a mica tape, 0.8 g of N-benzyl-quinolinium-hexafluoroantimonate are dissolved at 40 °C in 499.2 g of the bath formulation, i.e. the above mentioned solution of 2.2 g of Benzopinacole in 996.2 g resin CY 179. (the resulting insulation system contains 0.22% Benzopinacole and 0.16 % N-benzylquinoliniumhexafluoroantimonate in CY 179).

The reactivity of this mixture is checked with a gel timer at 80 °C and 140 °C.

To produce plates for the other tests, the formulation is poured into moulds of corresponding thicknesses to prepare plates for the various tests. After pouring the material into the moulds, these are put into an oven for 2 hours at 90 °C, 2 hours at 130 °C and 2 hours at 180 °C.

### d) Test Results

The results of the afore-mentioned tests with the curable epoxy bath formulations of Comparative Examples 1 and 2 as well as the Inventive Example 1 are summarized in Table 1 below (data determined without tape, just for illustrating the properties of the epoxy matrix of such insulation systems).

**Table 1**

| | Comparative Example 1 | Comparative Example 2 | Inventive Example 1 |
|---|---|---|---|
| MY 790-1 | 100 | | |
| HY 1102 | 100 | | |
| XD 4410 | | 100 | |
| CY 179 | | | 99.62 |
| XB 6079A | | | 0.16 |
| Benzopinacole | | | 0.22 |
| DY 9577 | 0.16 | | |
| DY 073-1 | 0.04 | | |
| Working hygiene | possible anhydride contact | very good | very good |
| Viscosity at 60°C [mPa.s] | 32 | 78 | 46.4 |
| Viscosity increase of formulation when stored at 23°C | 12% (80 days) (without DY 9577 / DY 073-1) | <6% (409 days) | 6.5% (180 days) (without XB 6079A) |
| Storage tank cooling needed | yes | no | no |
| Number of components to mix | 2 | 1 | 1 |
| Gelation time at 80°C | n.a. | >> 1000 min | 8h 50 min |
| Gelation time at 140°C | n.a. | 30 min | 2 min |
| Glass transition temperature T_{g} | 144 °C | 130°C | 173°C |
| Curing time | 16h(90°C)/10h(140°C) | 4h(125°C)/12h(170°C) | 2h(90°C)/2h(130°C)/2 h(180 °C) |
| Dissipation factor tan δ at 155 °C | 8% | 12% | 5.8% |
| 5% weight loss at (TGA 20K/min) | 390 °C | 400 °C | 390 °C |
| Thermal insulation class rating | H | F | H |

| | | | |
|---|---|---|---|
| T_{g} determined according to ISO 6721/94; Dielectric dissipation factor tan δ determined according to IEC 60250; 5% weight loss at (TGA 20K/min): The indicated temperature is the temperature, for which the weight loss is just reaching 5% during heating a sample with a heating rate of 20 K/min. | | | |

### (C) Preparation of mica paper and mica tapes according to the invention and application tests thereof:

A mica paper sheet based on uncalcined mica flakes with an areal weight of 160 g/m² is cut in a rectangular shape of the size 200 x 100 mm. For mica paper impregnation a solution of XB 6079 A in methyl ethyl ketone (MEK) is prepared which contains 0.25 wt % of XB 6079 A. The mica sheet is impregnated with 2.0 g of the solution and the solvent is removed in an oven at 120 °C for 1 min.

The treated mica paper is either used as it is or is combined with a glass fabric. In that case a glass fabric style 792 (23 g/m², 26x15 5.5 tex/5.5 tex) which has previously been coated with 3 g/m² of an epoxy/acrylic resin mixture, is adhered to the mica tape using a solid epoxy resin having a melting point around 100 °C. For this purpose the solid epoxy resin is evenly dispersed on the treated mica paper. Then the glass fabric is laid on top. The specimen is put into a heated press to melt the epoxy resin (130 °C for 30 s). The glass fabric and the mica paper stick together after removing from the press.

The obtained mica paper sheets and glass/mica specimens are cut in halfs to give 100 x 100 mm samples. 4 layers of mica paper are piled with each 1.5 g evenly distributed impregnation resin between the layers giving a total resin weight of 4.5 g.

The impregnated specimens are used for monitoring the dissipation factor tan δ during cure in a Tettex instrument or are cured in a heated press. Cure in the Tettex instrument and tan(8) measurement is conducted at 155 °C. Cure in the hot press is conducted following the following temperature cycle: 90 °C at 2 bar for 2h - 130 °C at 2 bar for 2 h - 180 °C, no pressure for 10 h. Excess resin is quenched out of the laminate during cure.

The cured composites are subjected to tan δ measurement at 155 °C and specimens for T_{g} determination with DMA (dynamic mechanical analysis), 3 point bending mode according IEC 61006, are cut out in the shape 50 mm x 10 mm.

The results of the afore-mentioned tests with the curable epoxy bath formulations of Comparative Example 1 (not containing DY9577 and 073-1) with Poroband ME 4020 (Reference system 1) and Comparative Example 2 with Poroband 0410 (Reference System 2) as well as the Inventive Example 1 are summarized in Table 2 below.

**Table 2**

| | Reference System 1 | Reference System 2 | Inventive System | |
|---|---|---|---|---|
| | | | mica paper only | mica paper/glass fabric |
| Dissipation factor tan δ (at 155 °C) | 4.4% | - | 5.4 % | 8.0 % |
| Glass transition temperature T_{g} | 151.4 °C | 121.7°C | 160.8 °C | 161.0 °C |

| | | | | |
|---|---|---|---|---|
| Dissipation factor tan δ determined according to IEC 60250 in a Tettex instrument using a guard ring electrode at 400 V/50Hz; T_{g} determined with DMA, 3 point bending mode, heating rate 5 K/min according to IEC 61006 using the tan δ maximum as T_{g}. | | | | |

### (D) Conclusions from the Examples above:

### a) Conclusions based on the comparisons without tape:

Regarding the first critical aspect of working hygiene, the anhydride-free inventive example is better than the classical anhydride-based reference, because it is does not contain a respiratory sensitizer and therefore is not regarded as a SVHC.

While the anhydride-based reference is quite low viscous, the existing anhydride-free solution according to Comparative Example 2 (XD 4410) is relatively high viscous and hence more difficult to impregnate into the mica-tape and the windings. The inventive bath formulation has a viscosity level quite similar to the anhydride-based reference and can impregnate better than the anhydride-free reference bath formulation based on XD 4410.

Regarding the bath stability, the anhydride-based reference builds up the viscosity at 23 °C during only 80 days already by 12 %. To overcome this issue, a cooled storage is normally applied. The anhydride-free reference bath formulation (XD 4410) is quite stable and therefore does not need a cooling. Surprisingly with the new bath system based on CY 179 and Benzopinacole, the bath stability is quite good (6.5 % build up during 180 days). Hence also no cooling would be typically required for the inventive bath composition.

A further advantage of the inventive system over the traditional reference is that there is no need for mixing the 2 components when refreshing the bath as it can be applied as one-component product. As there is no anhydride that may partly evaporate during the application process out of the bath and hence impacting the optimal mixing ratio with the reference, this issue does not happen with the inventive example resulting in a better quality consistency.

The reactivity of the inventive product is quite low at temperatures up to 80 °C but fast at temperatures around 140 °C. This means that this system is quite latent and therefore stable at storage temperature but highly reactive and higher temperature.

The one component reference according to Comparative Example 2 is also quite slow at 80 °C, however it is still slow at high curing temperature (gel time of 30 min at 140 °C).

The T_{g} of the inventive system is quite high. That is positive, as there is more distance to the application critical temperature of 155 °C.

The most positive and surprising finding is that the dielectric dissipation factor tan δ at 155 °C is even lower and hence better than that of the anhydride-based reference containing a tertiary amine or boron trichloride-octyldimethylamine adduct as curing accelerator.

A dielectric dissipation factor tan δ of > 10% at 155°C is the main issue of the anhydride free reference example (XD 4410) of Comparative Example 2 and the reason why such systems could not be used for class H application, although it would be even better temperature stable according to the weight loss short term experiment given in the table. In this respect the inventive example is at least as stable as the unmodified reference.

So as a conclusion the new inventive insulation system surprisingly eliminates all issues of traditional insulation system for vacuum pressure impregnation, the anhydride/SVHC/REACH issue as well the issues of already known anhydride-free systems such as high viscosity, low reactivity at high temperature, limitation to class F and a too high dielectric dissipation factor tan δ of more than 10%.

### a) Conclusions based on the comparisons of impregnated mica paper and mica tapes

Experiments exhibit a good impregnability of the mica paper and glass/mica tape specimens at low temperature. Also the compatibility with polyester-polyols, which can be used for mechanical enhancement of the impregnated mica paper and glass/mica combination, can be shown. The polyester-polyol leads to only slightly higher tan δ values, T_{g} is equal to samples containing no polyester-polyol.

Tests with mica paper impregnated with different levels of N-Benzyl-Quinolinium-Hexafluoroantimonate (0,12 - 0,5 g/m²) show little influence of the concentration on the tan δ and T_{g} values of the insulation material.

## Claims

1. An anhydride-free insulation system for current-carrying construction parts of an electric engine which comprises:
(A) a mica paper or mica tape for wrapping parts of said electric engine that are potentially current-carrying during operation of the engine, which mica paper or mica tape is impregnable via vacuum pressure impregnation with a thermally curable epoxy resin formulation and comprises a thermally activatable curing initiator for the epoxy resin formulation containing one or more quarternary ammonium salts of an aromatic-heterocyclic compound, which contains 1 or 2 nitrogen atoms, and a complex anion selected from the group consisting of BF₄⁻, PF₆⁻, SbF₆⁻, SbF₅(OH)⁻, AsF₆⁻ and Al[OC(CF₃)₃]₄⁻ in an amount sufficient to cure the epoxy resin taken up by the mica paper or mica tape and the construction part of the engine during the vacuum pressure impregnation step;
(B) a thermally curable bath formulation for the vacuum pressure impregnation comprising one or more epoxy resins, which formulation is substantially or, preferably, entirely free of a thermally activatable curing initiator for the epoxy resin formulation, in particular of quarternary ammonium salts of aromatic-heterocyclic compounds containing 1 or 2 nitrogen atoms, and of a complex anion selected from the group consisting of BF₄⁻, PF₆⁻, SbF₆⁻, SbF₅(OH)⁻, AsF₆⁻ and Al[OC(CF₃)₃]₄⁻, and
(C) one or more co-initiator for the thermally activatable curing initiator selected from a diarylethane derivative of formula: 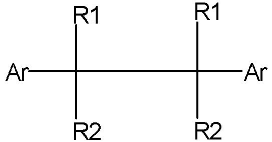 wherein Ar is phenyl, naphthyl, or C₁-C₄alkyl- or chloro-substituted phenyl, R1 is hydroxy, C₁-C₄alkoxy, -O-CO-R3 or -OSiR4R5R6, wherein R3 is C₁-C₈alkyl or phenyl, and R4, R5 and R6 are each independently of one another C₁-C₄alkyl or phenyl, and R2 is C₁-C₄alkyl or cyclohexyl or has the same meaning as Ar, wherein one or more of said co-initiators may be contained in the mica paper or mica tape (A) of the system and/or one or more of said co-initiators may be contained in the thermally curable epoxy resin bath formulation (B) of the system and is present in said mica paper or mica tape (A) and/or in said thermally curable epoxy resin bath formulation (B) in an overall amount sufficient to cure the epoxy resin taken up by the mica paper or mica tape and the construction part of the engine during the vacuum pressure impregnation step after said step.

2. An insulation system according to claim 1, wherein the mica paper or mica tape (A) comprises the thermally activatable curing initiator in an amount of about 0.1 to about 15 g/m² of the mica paper or mica tape, preferably about 0.2 to about 7.5 g/m².

3. An insulation system according to claim 2, wherein the mica paper or mica tape (A) comprises co-initiator(s) (C) in an amount between 0 and about 15 g/m².

4. An insulation system according to claim 3, wherein the entire amount of co-initiator(s) (C) is contained in the mica paper or mica tape (A) of the system.

5. An insulation system according to any one of claims 1 to 4, wherein the entire amount of co-initiator(s) (C) is contained in the thermally curable epoxy resin bath formulation (B) of the system.

6. An insulation system according to any one claims 1 to 5, wherein the epoxy resin(s) of the thermally curable bath formulation (B) is/are derived from cycloaliphatic polycarboxylic acids and/or cycloaliphatic epoxy resins comprising at least one epoxy group, preferably two epoxy groups, fused to a cycloaliphatic ring in the molecule of the epoxy resin.

7. An insulation system according to any one claims 1 to 6, wherein the thermally activatable curing initiator comprises or, preferably, is N-benzylquinolinium hexafluoroantimonate.

8. An insulation system according to any one claims 1 to 7, wherein the co-initiator(s) (C) comprise 1,1,2,2-tetraphenyl-1,2-ethanediol (benzopinacol) or, preferably, the co-initiator is 1,1,2,2-tetraphenyl-1,2-ethanediol.

9. An insulation system according to claim 1, wherein the thermally curable bath formulation comprises the co-initiator (C).

10. A mica paper or mica tape comprising a thermally activatable curing initiator consisting of one or more quarternary ammonium salts of an aromatic-heterocyclic compound, which contains 1 or 2 nitrogen atoms, and a complex anion selected from the group consisting of BF₄⁻, PF₆⁻, SbF₆⁻, SbF₅(OH)⁻, AsF₆⁻ and [Al(OC(CF₃)₃)₄]⁻.

11. A mica paper or mica tape according to claim 10, which comprises the thermally activatable curing initiator in an amount of about 0.1 to about 15 g/m² of the mica paper or mica tape, preferably of about 0.2 to about 7.5 g/m².

12. A mica paper or mica tape according to claim 10 or 11, which additionally comprises one or more co-initiator for said thermally activatable curing initiator selected from a diarylethane derivative of formula: 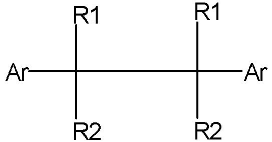 wherein Ar is phenyl, naphthyl, or C₁-C₄alkyl- or chloro-substituted phenyl, R1 is hydroxy, C₁-C₄alkoxy, -O-CO-R3 or -OSiR4R5R6, wherein R3 is C₁-C₈alkyl or phenyl, and R4, R5 and R6 are each independently of one another C₁-C₄alkyl or phenyl, and R2 is C₁-C₄alkyl or cyclohexyl or has the same meaning as Ar.

13. The use of an anhydride-free insulation system for current-carrying construction parts of an electric engine in form of a kit of parts as claimed in any one of claims 1 to 9 in the manufacture of rotors or stators of electrical generators or motors.

14. A process for using an anhydride-free insulation system for current-carrying construction parts of an electric engine as claimed in any one of claims 1 to 9 or a mica paper or mica tape according to any one of claims 10 to 12 in the manufacture of rotors or stators of electrical generators or motors, wherein
(a) the potentially current-carrying parts of the rotor or stator or the construction part thereof are wrapped with a mica paper or mica tape which is impregnable via vacuum pressure impregnation with a thermally curable epoxy resin formulation and comprises a thermally activatable curing initiator for the epoxy resin formulation consisting of one or more quarternary ammonium salts of an aromatic-heterocyclic compound, which contains 1 or 2 nitrogen atoms, and a complex anion selected from the group consisting of BF₄⁻, PF₆⁻, SbF₆⁻, SbF₅(OH)⁻, AsF₆⁻ and Al[OC(CF₃)₃]₄⁻, and, optionally, at least a partial quantity of one or more co-initiator required for the thermally activatable curing initiator to cure the epoxy resin formulation, selected from a diarylethane derivative of formula: 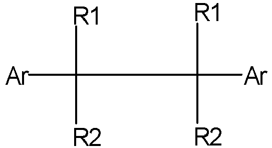 wherein Ar is phenyl, naphthyl, or C₁-C₄alkyl- or chloro-substituted phenyl, R1 is hydroxy, C₁-C₄alkoxy, -O-CO-R3 or -OSiR4R5R6, wherein R3 is C₁-C₈alkyl or phenyl, and R4, R5 and R6 are each independently of one another C₁-C₄alkyl or phenyl, and R2 is C₁-C₄alkyl or cyclohexyl or has the same meaning as Ar, wherein the thermally activatable curing initiator is contained by said mica paper or mica tape in an amount sufficient to cure the epoxy resin taken up by the mica paper or mica tape and the construction part of the engine during a vacuum pressure impregnation step,
(b) the rotor or stator or the construction part thereof is inserted into a container,
(c) the container is evacuated,
(d) a thermally curable bath formulation comprising one or more epoxy resins, which formulation is substantially or, preferably, entirely free of a thermally activatable curing initiator for the epoxy resin formulation, in particular of quarternary ammonium salts of aromatic-heterocyclic compounds containing 1 or 2 nitrogen atoms, and of a complex anion selected from the group consisting of BF₄⁻, PF₆⁻, SbF₆⁻, SbF₅(OH)⁻, AsF₆⁻ and Al[OC(CF₃)₃]₄⁻ and which comprises the remainder of the amount of the one or more co-initiator(s) required for the thermally activatable curing initiator to cure the epoxy resin formulation, is fed into the evacuated container followed by a period of applying an overpressure e.g. of dry air or nitrogen to the container containing the rotor or stator or the construction part thereof, optionally under cautious heating in order to reduce the viscosity of the thermally curable bath formulation in the container sufficiently to allow that said formulation penetrates said mica paper or mica tape and the gaps and voids existing in the structure of the rotor or stator or the construction part thereof within a desired time period forced by the pressure difference between the vacuum and the high pressure applied to the components,
(e) the residual thermally curable bath formulation is removed from the container, and
(f) the rotor or stator or the construction part thereof, impregnated with the thermally curable bath formulation, is removed from the container and heated after removal from the container in order to cure the thermally curable bath formulation comprised by said rotor or stator or the construction part thereof.

15. The process according to claim 14, wherein the thermally curable bath formulation comprising one or more epoxy resins is fed into the evacuated container in step (d) from a storage tank and is returned to said storage tank again after removal from the container in step (e) and stored in the storage tank, optionally under cooling, for further use.

## Patentansprüche

1. Eine anhydridfreie Isolierungsanordnung für stromführende Konstruktionsteile einer elektrischen Maschine, welche umfasst:
(A) ein Glimmerpapier oder Glimmerband zum Umwickeln von Teilen besagter elektrischen Maschine, die potentiell während des Betriebs der Maschine stromführend sind, wobei das Glimmerpapier oder Glimmerband durch Vakuumdruckimprägnierung mit einer thermisch aushärtbaren Epoxidharzformulierung imprägnierbar ist und einen thermisch aktivierbaren Aushärtungsinitiator für die Epoxidharzformulierung umfasst, die ein oder mehrere quartäre Ammoniumsalze einer aromatisch-heterocyclischen Verbindung, die 1 oder 2 Stickstoffatome enthält, und ein komplexes Anion, ausgewählt aus der Gruppe, bestehend aus BF₄⁻, PF₆⁻, SbF₆⁻, SbF₅(OH)⁻, AsF₆⁻ und Al[OC(CF₃)₃]₄⁻, enthält, in einer Menge, die ausreichend ist, um das Epoxidharz auszuhärten, das von dem Glimmerpapier oder Glimmerband und dem Konstruktionsteil der Maschine während des Vakuumdruckimprägnierungsschritts aufgenommen ist;
(B) eine thermisch aushärtbare Badformulierung für die Vakuumdruckimprägnierung, umfassend ein oder mehrere Epoxidharze, wobei die Formulierung im Wesentlichen oder vorzugsweise vollständig frei von einem thermisch aktivierbaren Aushärtungsinitiator für die Epoxidharzformulierung ist, insbesondere von quartären Ammoniumsalzen von aromatisch-heterocyclischen Verbindungen, die 1 oder 2 Stickstoffatome enthalten, und von einem komplexen Anion, ausgewählt aus der Gruppe, bestehend aus BF₄⁻, PF₆⁻, SbF₆⁻, SbF₅(OH)⁻, AsF₆⁻ und Al[OC(CF₃)₃]₄⁻, und
(C) einen oder mehrere Co-Initiatoren für den thermisch aktivierbaren Aushärtungsinitiator, ausgewählt aus einem Diarylethan-Derivat der Formel: 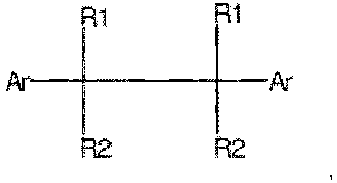 wobei Ar Phenyl, Naphthyl oder C₁-C₄-alkyl- oder chlorsubstituiertes Phenyl ist, R1 Hydroxy, C₁-C₄-Alkoxy, -O-CO-R3 oder -OSiR4R5R6 ist, wobei R3 C₁-C₈-Alkyl oder Phenyl ist und R4, R5 und R6 jeweils unabhängig voneinander C₁-C₄-Alkyl oder Phenyl sind und R2 C₁-C₄-Alkyl oder Cyclohexyl ist oder dieselbe Bedeutung hat wie Ar, wobei einer oder mehrere besagter Co-Initiatoren im Glimmerpapier oder Glimmerband (A) der Anordnung enthalten sein kann und/oder ein oder mehrere besagter Co-Initiatoren in der thermisch aushärtbaren Epoxidharzbadformulierung (B) der Anordnung enthalten sein kann und in besagtem Glimmerpapier oder Glimmerband (A) und/oder in besagter thermisch aushärtbaren Epoxidharzbadformulierung (B) in einer Gesamtmenge vorliegt, die ausreichend ist, um das Epoxidharz auszuhärten, das von dem Glimmerpapier oder Glimmerband und dem Konstruktionsteil der Maschine während des Vakuumdruckimprägnierungsschrittes nach besagtem Schritt aufgenommen ist.

2. Eine Isolierungsanordnung nach Anspruch 1, wobei das Glimmerpapier oder Glimmerband (A) den thermisch aktivierbaren Aushärtungsinitiator in einer Menge von etwa 0,1 bis etwa 15 g/m² des Glimmerpapiers oder Glimmerbandes, vorzugsweise etwa 0,2 bis etwa 7,5 g/m², umfasst.

3. Eine Isolierungsanordnung nach Anspruch 2, wobei das Glimmerpapier oder Glimmerband (A) Co-Initiator(en) (C) in einer Menge zwischen 0 und etwa 15 g/m² umfasst.

4. Eine Isolierungsanordnung nach Anspruch 3, wobei die Gesamtmenge an Co-Initiator(en) (C) im Glimmerpapier oder Glimmerband (A) der Anordnung enthalten ist.

5. Eine Isolierungsanordnung nach einem der Ansprüche 1 bis 4, wobei die Gesamtmenge an Co-Initiator(en) (C) in der thermisch aushärtbaren Epoxidharzbadformulierung (B) der Anordnung enthalten ist.

6. Eine Isolierungsanordnung nach einem der Ansprüche 1 bis 5, wobei das(die) Epoxidharz(e) der thermisch aushärtbaren Badformulierung (B) von cycloaliphatischen Polycarbonsäuren und/oder cycloaliphatischen Epoxidharzen, die wenigstens eine Epoxygruppe, vorzugsweise zwei Epoxygruppen, umfassen, kondensiert an einen cycloaliphatischen Ring im Molekül des Epoxidharzes, abgeleitet ist/sind.

7. Eine Isolierungsanordnung nach einem der Ansprüche 1 bis 6, wobei der thermisch aktivierbare Aushärtungsinitiator N-Benzylchinoliniumhexafluoroantimonat umfasst oder vorzugsweise ist.

8. Eine Isolierungsanordnung nach einem der Ansprüche 1 bis 7, wobei der(die) Co-Initiator(en) (C) 1,1,2,2-Tetraphenyl-1,2-ethandiol (Benzopinacol) umfasst (umfassen) oder vorzugsweise der Co-Initiator 1,1,2,2-Tetraphenyl-1,2-ethandiol ist.

9. Eine Isolierungsanordnung nach Anspruch 1, wobei die thermisch aushärtbare Badformulierung den Co-Initiator (C) umfasst.

10. Ein Glimmerpapier oder Glimmerband, umfassend einen thermisch aktivierbaren Aushärtungsinitiator, bestehend aus einem oder mehreren quartären Ammoniumsalzen einer aromatisch-heterocyclischen Verbindung, die 1 oder 2 Stickstoffatome enthält, und einem komplexen Anion, ausgewählt aus der Gruppe, bestehend aus BF₄⁻, PF₆⁻, SbF₆⁻, SbF₅(OH)⁻, AsF₆⁻ und Al[OC(CF₃)₃]₄⁻.

11. Ein Glimmerpapier oder Glimmerband nach Anspruch 10, das den thermisch aktivierbaren Aushärtungsinitiator in einer Menge von etwa 0,1 bis etwa 15 g/m² des Glimmerpapieres oder Glimmerbandes, vorzugsweise von etwa 0,2 bis etwa 7,5 g/m², umfasst.

12. Ein Glimmerpapier oder Glimmerband nach Anspruch 10 oder 11, das zusätzlich einen oder mehrere Co-Initiatoren für besagten thermisch aktivierbaren Aushärtungsinitiator umfasst, ausgewählt aus einem Diarylethan-Derivat der Formel: 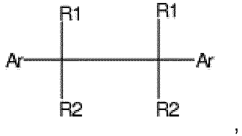 wobei Ar Phenyl, Naphthyl oder C₁-C₄-alkyl oder chlorsubstituiertes Phenyl ist, R1 Hydroxy, C₁-C₄-Alkoxy, -O-CO-R3 oder -OSiR4R5R6 ist, wobei R3 C₁-C₈-Alkyl oder Phenyl ist und R4, R5 und R6 jeweils unabhängig voneinander C₁-C₄-Alkyl oder Phenyl sind und R2 C₁-C₄-Alkyl oder Cyclohexyl ist oder dieselbe Bedeutung hat wie Ar.

13. Die Verwendung einer anhydridfreien Isolierungsanordnung für stromführende Konstruktionsteile einer elektrischen Maschine in Form eines Satzes von Teilen wie beansprucht in einem der Ansprüche 1 bis 9, bei der Herstellung von Rotoren oder Statoren elektrischer Generatoren oder Motoren.

14. Ein Verfahren zur Verwendung einer anhydridfreien Isolierungsanordnung für stromführende Konstruktionsteile einer elektrischen Maschine, wie beansprucht in einem der Ansprüche 1 bis 9, oder eines Glimmerpapiers oder Glimmerbandes nach einem der Ansprüche 10 bis 12 bei der Herstellung von Rotoren oder Statoren von elektrischen Generatoren oder Motoren, wobei
(a) die potentiell stromführenden Teile des Rotors oder Stators oder des Konstruktionsteiles davon mit einem Glimmerpapier oder Glimmerband umwickelt werden, das durch Vakuumdruckimprägnierung mit einer thermisch aushärtbaren Epoxidharzformulierung imprägnierbar ist und einen thermisch aktivierbaren Aushärtungsinitiator für die Epoxidharzformulierung umfasst, bestehend aus einem oder mehreren quartären Ammoniumsalzen einer aromatisch-heterocyclischen Verbindung, die 1 oder 2 Stickstoffatome enthält, und einem komplexen Anion, ausgewählt aus der Gruppe, bestehend aus BF₄⁻, PF₆⁻, SbF₆⁻, SbF₅(OH)⁻, AsF₆⁻ und Al[OC(CF₃)₃]₄⁻, und, fakultativ, wenigstens eine Teilmenge eines oder mehrere Co-Initiatoren, der(die) erforderlich ist(sind), damit der thermisch aktivierbare Aushärtungsinitiator die Epoxidharzformulierung aushärtet, ausgewählt aus einem Diarylethan-Derivat der Formel: 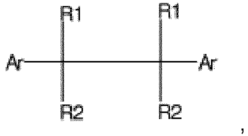 wobei Ar Phenyl, Naphthyl oder C₁-C₄-alkyl oder chlorsubstituiertes Phenyl ist, R1 Hydroxy, C₁-C₄-Alkoxy, -O-CO-R3 oder -OSiR4R5R6 ist, wobei R3 C₁-C₈-Alkyl oder Phenyl ist und R4, R5 und R6 jeweils unabhängig voneinander C₁-C₄-Alkyl oder Phenyl sind und R2 C₁-C₄-Alkyl oder Cyclohexyl ist oder dieselbe Bedeutung hat wie Ar, wobei der thermisch aktivierbare Aushärtungsinitiator in besagtem Glimmerpapier oder Glimmerband in einer Menge enthalten ist, die ausreichend ist, um das Epoxidharz auszuhärten, das von dem Glimmerpapier oder Glimmerband und dem Konstruktionsteil der Maschine während eines Vakuumdruckimprägnierungsschrittes aufgenommen ist,
(b) der Rotor oder Stator oder das Konstruktionsteil davon in einen Behälter eingebracht wird,
(c) der Behälter evakuiert wird,
(d) eine thermisch aushärtbare Badformulierung, die ein oder mehrere Epoxidharze umfasst, wobei die Formulierung im Wesentlichen oder vorzugsweise vollständig frei von einem thermisch aktivierbaren Aushärtungsinitiator für die Epoxidharzformulierung ist, insbesondere von quartären Ammoniumsalzen von aromatisch-heterocyclischen Verbindungen, die 1 oder 2 Stickstoffatome enthalten, und von einem komplexen Anion, ausgewählt aus der Gruppe, bestehend aus BF₄⁻, PF₆⁻, SbF₆⁻, SbF₅(OH)⁻, AsF₆⁻ und Al[OC(CF₃)₃]₄⁻, und die den Rest der Menge von dem einen oder mehreren Co-Initiator(en) umfasst, die erforderlich ist, damit der thermisch aktivierbare Aushärtungsinitiator die Epoxidharzformulierung aushärtet, in den evakuierten Behälter zugeführt wird, gefolgt von einem Zeitraum der Beaufschlagung mit einem Überdruck, z.B. von trockener Luft oder Stickstoff, des Behälters, der den Rotor oder Stator oder das Konstruktionsteil davon enthält, fakultativ unter vorsichtiger Erwärmung, um die Viskosität der thermisch aushärtbaren Badformulierung im Behälter ausreichend zu verringern, um zu ermöglichen, dass besagte Formulierung in besagtes Glimmerpapier oder Glimmerband und die Spalten und Hohlräume, die in der Struktur des Rotors oder Stators oder des Konstruktionsteiles davon existieren, innerhalb eines gewünschten Zeitraumes eindringt, bewirkt durch den Druckunterschied zwischen dem Vakuum und dem auf die Komponenten ausgeübten hohen Druck,
(e) die restliche thermisch aushärtbare Badformulierung aus dem Behälter entfernt wird und
(f) der Rotor oder Stator oder das Konstruktionsteil davon, imprägniert mit der thermisch aushärtbaren Badformulierung, aus dem Behälter entfernt und nach Entfernung aus dem Behälter erwärmt wird, um die thermisch aushärtbare Badformulierung auszuhärten, die in dem besagten Rotor oder Stator oder dem Konstruktionsteil davon enthalten ist.

15. Das Verfahren nach Anspruch 14, wobei die thermisch aushärtbare Badformulierung, die ein oder mehrere Epoxidharze umfasst, in den evakuierten Behälter in Schritt (d) aus einem Vorratstank zugeführt wird und zu besagtem Vorratstank wieder rückgeführt wird nach Entfernung aus dem Behälter in Schritt (e) und in dem Vorratstank, fakultativ unter Kühlung, für weiteren Gebrauch gelagert wird.

## Revendications

1. Système d'isolation exempt d'anhydride, destiné à des pièces de structure sous tension d'un moteur électrique, le système comprenant :
(A) un papier de mica ou un ruban de mica permettant d'envelopper des pièces dudit moteur électrique qui sont éventuellement sous tension pendant le fonctionnement du moteur, le papier de mica ou le ruban de mica pouvant être imprégné, par l'intermédiaire d'une imprégnation sous pression à vide, avec une formulation de résine époxyde traitable thermiquement, et comprenant un initiateur de traitement activable thermiquement pour la formulation de résine époxyde, contenant un ou plusieurs sels d'ammonium quaternaire d'un composé hétérocyclique aromatique contenant 1 ou 2 atomes d'azote, et un anion complexe choisi dans le groupe constitué par BF₄⁻, PF₆⁻, SbF₆⁻, SbF₅(OH)⁻, AsF₆⁻ et Al[OC(CF₃)₃]₄⁻ dans une quantité suffisante pour traiter la résine époxyde reprise par le papier de mica ou le ruban de mica et la pièce de structure du moteur pendant l'étape de imprégnation sous pression à vide ;
(B) une formulation de bain traitable thermiquement pour l'imprégnation sous pression à vide, comprenant une ou plusieurs résines époxyde, ladite formulation étant sensiblement ou, de préférence, entièrement exempte d'un initiateur de traitement activable thermiquement pour la formulation de résine époxyde, en particulier de sels d'ammonium quaternaire de composés hétérocycliques aromatiques contenant 1 ou 2 atomes d'azote, et d'un anion complexe choisi dans le groupe constitué par BF₄⁻, PF₆⁻, SbF₆⁻, SbF₅(OH)⁻, AsF₆⁻ et Al[OC(CF₃)₃]₄⁻ ; et
(C) un ou plusieurs co-initiateurs pour l'initiateur de traitement activable thermiquement, choisis parmi un dérivé de diaryléthane représenté par la formule : 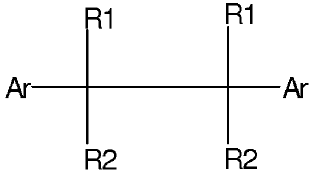 dans laquelle Ar est phényle, naphtyle ou phényle substitué par alkyle C₁-C₄ ou par chlore, R1 est hydroxy, alkoxy C₁-C₄, -O-CO-R3 ou -OSiR4R5R6, où R3 est alkyle C₁-C₈ ou phényle, et R4, R5 et R6 sont chacun indépendamment alkyle C₁-C₄ ou phényle, et R2 est alkyle C₁-C₄ ou cyclohéxyle ou possède la même signification que Ar, un ou plusieurs desdits co-initiateurs pouvant être contenus dans le papier de mica ou le ruban de mica (A) du système et/ou un ou plusieurs desdits co-initiateurs pouvant être contenus dans la formulation de bain à résine époxyde traitable thermiquement (B) du système et étant présents dans ledit papier de mica ou ruban de mica (A) et/ou dans ladite formulation de bain à résine époxyde traitable thermiquement (B) en une quantité globale suffisante pour traiter la résine époxyde reprise par le papier de mica ou le ruban de mica et la pièce de structure du moteur pendant l'étape de imprégnation sous pression à vide après ladite étape.

2. Un système d'isolation selon la revendication 1, dans lequel le papier de mica ou le ruban de mica (A) comprend l'initiateur de traitement activable thermiquement en une quantité comprise entre environ 0,1 et environ 15 g/m² du papier de mica ou du ruban de mica, de préférence entre environ 0,2 et environ 7,5 g/m².

3. Un système d'isolation selon la revendication 2, dans lequel le papier de mica ou le ruban de mica (A) comprend un ou plusieurs co-initiateurs (C) en une quantité comprise entre 0 et environ 15 g/m².

4. Un système d'isolation selon la revendication 3, dans lequel la quantité entière du ou des co-initiateurs (C) est contenue dans le papier de mica ou le ruban de mica (A) du système.

5. Un système d'isolation selon l'une quelconque des revendications 1 à 4, dans lequel la quantité entière du ou des co-initiateurs (C) est contenue dans la formulation de bain à résine époxyde traitable thermiquement (B) du système.

6. Un système d'isolation selon l'une quelconque des revendications 1 à 5, dans lequel la ou les résines époxyde de la formulation de bain à résine époxyde traitable thermiquement (B) sont dérivées d'acides polycarboxyliques cycloaliphatiques et/ou de résines époxydes cycloaliphatiques comprenant au moins un groupe époxyde, de préférence deux groupes époxydes, fusionnés à un cycle cycloaliphatique dans la molécule de la résine époxyde.

7. Un système d'isolation selon l'une quelconque des revendications 1 à 6, dans lequel l'initiateur de traitement activable thermiquement comprend, ou est de préférence, l'héxafluoroantimonate de N-benzylquinolinium.

8. Un système d'isolation selon l'une quelconque des revendications 1 à 7, dans lequel le ou les co-initiateurs (C) comprennent du 1,1,2,2-tétraphényl-1,2-éthanediol (benzopinacol) ou, de préférence, le co-initiateur est le 1,1,2,2-tétraphényl-1,2-éthanediol.

9. Un système d'isolation selon la revendication 1, dans lequel la formulation de bain traitable thermiquement comprend le co-initiateur (C).

10. Papier de mica ou ruban de mica comprenant un initiateur de traitement activable thermiquement consistant en un ou plusieurs sels d'ammonium quaternaire d'un composé hétérocyclique aromatique contenant 1 ou 2 atomes d'azote, et un anion complexe choisi dans le groupe constitué par BF₄⁻, PF₆⁻, SbF₆⁻, SbF₅(OH)⁻, AsF₆⁻ et Al[OC(CF₃)₃]₄⁻.

11. Un papier de mica ou un ruban de mica selon la revendication 10, comprenant l'initiateur de traitement activable thermiquement en une quantité comprise entre environ 0,1 et environ 15 g/m² du papier de mica ou du ruban de mica, de préférence entre environ 0,2 et environ 7,5 g/m².

12. Un papier de mica ou un ruban de mica selon les revendications 10 ou 11, comprenant en outre un ou plusieurs co-initiateurs pour ledit initiateur de traitement activable thermiquement, choisis parmi un dérivé de diaryléthane représenté par la formule : 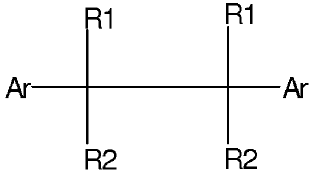 dans laquelle Ar est phényle, naphtyle ou phényle substitué par alkyle C₁-C₄ ou par chlore, R1 est hydroxy, alkoxy C₁-C₄, -O-CO-R3 ou -OSiR4R5R6, où R3 est alkyle C₁-C₈ ou phényle, et R4, R5 et R6 sont chacun indépendamment alkyle C₁-C₄ ou phényle, et R2 est alkyle C₁-C₄ ou cyclohéxyle ou possède la même signification que Ar.

13. Utilisation d'un système d'isolation exempt d'anhydride destiné à des pièces de structure sous tension d'un moteur électrique, en forme d'un kit de pièces selon l'une quelconque des revendications 1 à 9, dans la fabrication de rotors ou de stators de moteurs ou générateurs électriques.

14. Procédé d'utilisation d'un système d'isolation exempt d'anhydride destiné à des pièces de structure sous tension d'un moteur électrique selon l'une quelconque des revendications 1 à 9, ou d'un papier de mica ou d'un ruban de mica selon l'une quelconque des revendications 10 à 12, dans la fabrication de rotors ou de stators de moteurs ou générateurs électriques, dans lequel
(a) les pièces éventuellement sous tension du rotor ou du stator ou leur pièce de structure sont enveloppées avec un papier de mica ou un ruban de mica pouvant être imprégné, par l'intermédiaire d'une imprégnation sous pression à vide, avec une formulation de résine époxyde traitable thermiquement, et comprenant un initiateur de traitement activable thermiquement pour la formulation de résine époxyde, consistant en un ou plusieurs sels d'ammonium quaternaire d'un composé hétérocyclique aromatique contenant 1 ou 2 atomes d'azote, et un anion complexe choisi dans le groupe constitué par BF₄⁻, PF₆⁻, SbF₆⁻, SbF₅(OH)⁻, AsF₆⁻ et Al[OC(CF₃)₃]₄⁻, et, optionnellement, au moins une quantité partielle d'un ou de plusieurs co-initiateurs requis pour permettre à l'initiateur de traitement activable thermiquement de traiter la formulation de résine époxyde, choisis parmi un dérivé de diaryléthane représenté par la formule : 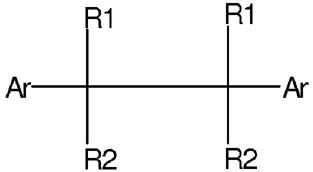 dans laquelle Ar est phényle, naphtyle ou phényle substitué par alkyle C₁-C₄ ou par chlore, R1 est hydroxy, alkoxy C₁-C₄, -O-CO-R3 ou -OSiR4R5R6, où R3 est alkyle C₁-C₈ ou phényle, et R4, R5 et R6 sont chacun indépendamment alkyle C₁-C₄ ou phényle, et R2 est alkyle C₁-C₄ ou cyclohéxyle ou possède la même signification que Ar, l'initiateur de traitement activable thermiquement étant contenu dans ledit papier de mica ou ledit ruban de mica en une quantité suffisante pour traiter la résine époxyde reprise par le papier de mica ou le ruban de mica et la pièce de structure du moteur pendant l'étape de imprégnation sous pression à vide,
(b) le rotor ou le stator ou leur pièce de structure est introduit dans un récipient,
(c) le récipient est mis sous vide,
(d) une formulation de bain traitable thermiquement comprenant une ou plusieurs résines époxydes, ladite formulation étant sensiblement ou, de préférence, entièrement exempte d'un initiateur de traitement activable thermiquement pour la formulation de résine époxyde, en particulier de sels d'ammonium quaternaire de composés hétérocycliques aromatiques contenant 1 ou 2 atomes d'azote, et d'un anion complexe choisi dans le groupe constitué par BF₄⁻, PF₆⁻, SbF₆⁻, SbF₅(OH)⁻, AsF₆⁻ et Al[OC(CF₃)₃]₄⁻ et comprenant le reste de la quantité du ou des co-initiateurs requis pour permettre à l'initiateur de traitement activable thermiquement de traiter la formulation de résine époxyde, est alimentée au récipient mis sous vide suivi d'une période d'application d'une surpression, par exemple d'air sec ou d'azote, au récipient contenant le rotor ou le stator ou leur pièce de structure, optionnellement sous un chauffage prudent afin de réduire la viscosité de la formulation de bain traitable thermiquement dans le récipient suffisamment pour permettre la pénétration de ladite formulation dans le papier de mica ou le ruban de mica et dans les espaces et vides existant dans la structure du rotor ou du stator ou de leur pièce de structure dans un intervalle de temps souhaité, forcée par la différence de pression entre le vide et la haute pression appliquée aux éléments,
(e) la formulation de bain traitable thermiquement résiduelle est retirée du récipient, et
(f) le rotor ou le stator ou leur pièce de structure, imprégné avec la formulation de bain traitable thermiquement, est retiré du récipient et chauffé après son retrait du récipient afin de traiter la formulation de bain traitable thermiquement comprise dans ledit rotor ou ledit stator ou leur pièce de structure.

15. Le procédé selon la revendication 14, dans lequel la formulation de bain traitable thermiquement, comprenant une ou plusieurs résines époxydes, est alimentée au récipient mis sous pression dans l'étape (d) à partir d'un réservoir de stockage et retournée à nouveau audit réservoir de stockage après son retrait du récipient dans l'étape (e) et stockée dans le réservoir de stockage, optionnellement sous refroidissement, pour une utilisation ultérieure.
